# EUROPEAN PATENT APPLICATION

(11) **EP 4 656 919 A1**
(43) Date of publication of application: **03.12.2025**
(21) Application number: 23918542.4
(22) Date of filing: 22.11.2023
(51) Int. Cl.: F16K 31/04

(54) **ELECTRIC VALVE AND ELECTRIC VALVE UNIT**

(30) Priority: 24.01.2023 JP 2023008648
(71) Applicant: Fujikoki Corporation, Tokyo 158-0082 (JP)
(72) Inventor: UEHARA, Satoshi, Tokyo 158-0082 (JP); HAMA, Takehiro, Tokyo 158-0082 (JP); MOCHIZUKI, Kenichi, Tokyo 158-0082 (JP); ARAI, Yusuke, Tokyo 158-0082 (JP)
(74) Representative: Ter Meer Steinmeister & Partner
(86) International application number: PCT/JP2023/041942
(87) International publication number: WO 2024/157587

(57) **Abstract**

Provided are an electrically driven valve and an electrically driven valve unit, which may realize an improved assembling property and improved reliability while maintain a small size. The electrically driven valve includes a valve main body including a valve chamber, an end opening that communicates with the valve chamber and that is opened in an axial direction, and a side opening that communicates with the valve chamber and that is opened in a direction intersecting the axis, a seat member, at least one portion of which is arranged within the end opening, the seat member including a valve seat disposed on a valve chamber side, a valve element configured to approach to or separate from the valve seat, and a conversion mechanism configured to convert a rotational movement of a rotor into a linear movement of the valve element, wherein the valve main body includes a contact surface configured to restrict a movement of the seat member toward the valve chamber side within the end opening.

## Description

### [Technical Field]

The present invention relates to an electrically driven valve and an electrically driven valve unit.

### [Background Art]

Hitherto, electrically driven valves have been assembled in midway of a fluid piping system, for example, to open and close a flow passage of the fluid or to perform a flow rate control thereof. For example, in an electrically driven valve as illustrated in Patent Literature 1, a rotational movement of a stepping motor is converted into an axial direction movement of the valve element to realize a flow rate control with high accuracy. Further, according to another type of electrically driven valve, a torque of the stepping motor is decelerated using a planetary gear deceleration mechanism etc., and transmitted to the valve element, so as to ensure sealability during a valve closed state.

### [Citation List]

### [Patent Literature]

[Patent Literature 1] Publication of Japanese Patent No. 7048144

### [Summary of Invention]

### [Technical Problem]

According to the electrically driven valve of Patent Literature 1, a cylindrical seat member on which a valve element is seated is attached by press-fitting to a valve main body from a valve chamber side, wherein an assembling property thereof becomes an issue. There are demands to allow the seat member to be press-fit to the valve main body from an end portion toward the valve chamber side.

However, in a case where the seat member is assembled to the valve main body from the end portion, when a pressure of a refrigerant is increased to high pressure, the seat member may fall out of the valve main body due to a differential pressure between the valve chamber and a valve opening on an inner side of the seat member. In order to avoid such problems, it is necessary to increase a press-fit margin, i.e., length of a press-fit portion, of the seat member with respect to the valve main body, which may lead to increase in size of the electrically driven valve.

In consideration of the problems described above, the present invention aims at providing an electrically driven valve and an electrically driven valve unit having an improved assembling property and improved reliability while maintaining a small size.

### [Means to Solve the Problem]

An electrically driven valve according to the present invention includes:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the valve main body includes a contact surface configured to restrict a movement of the seat member toward the valve chamber side within the end opening.

Further, the electrically driven valve according to the present invention includes:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the seat member is inserted into the end opening from one end side of the valve main body toward the valve chamber, and configured to come into contact across an entire circumference with the vale main body in a circumference of the valve seat.

### [Effects of Invention]

The present invention enables to provide an electrically driven valve and an electrically driven valve unit having an improved assembling property and improved reliability while maintaining a small size.

### [Brief Description of Drawings]

FIG. 1 is a vertical cross-sectional view of an electrically driven valve according to a present embodiment.
FIG. 2 is a vertical cross-sectional view illustrating a lower portion of the electrically driven valve in a valve closed state.
FIG. 3 is a vertical cross-sectional view illustrating the lower portion of the electrically driven valve in a valve opened state.

### [Description of Embodiments]

Hereinafter, an embodiment of an electrically driven valve according to the present invention will be described with reference to the drawings. In the present specification, a rotor side of the electrically driven valve is referred to as an upper side, and a flow passage block side corresponding thereto is referred to as a lower side. A mechanical paradox planetary gear deceleration mechanism is one type of a planetary gear deceleration mechanism.

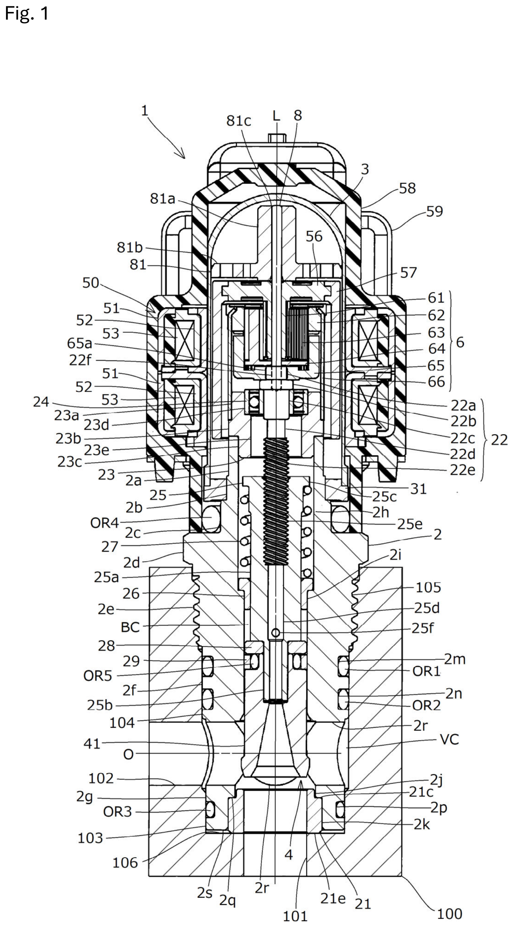

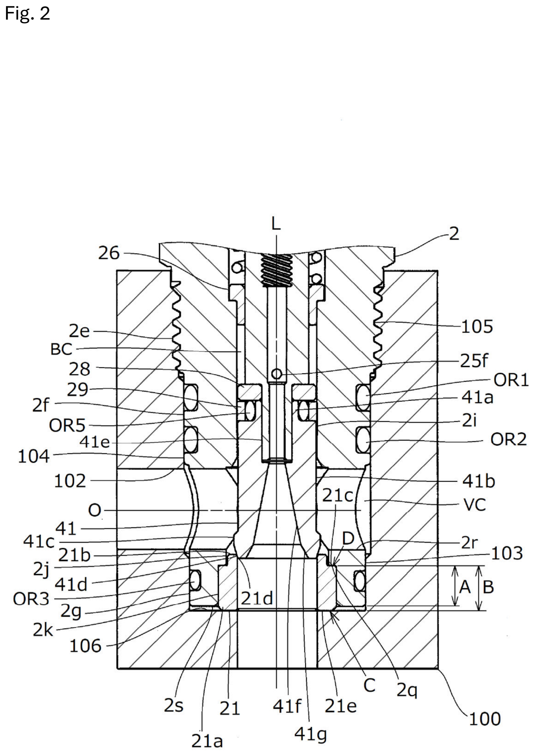

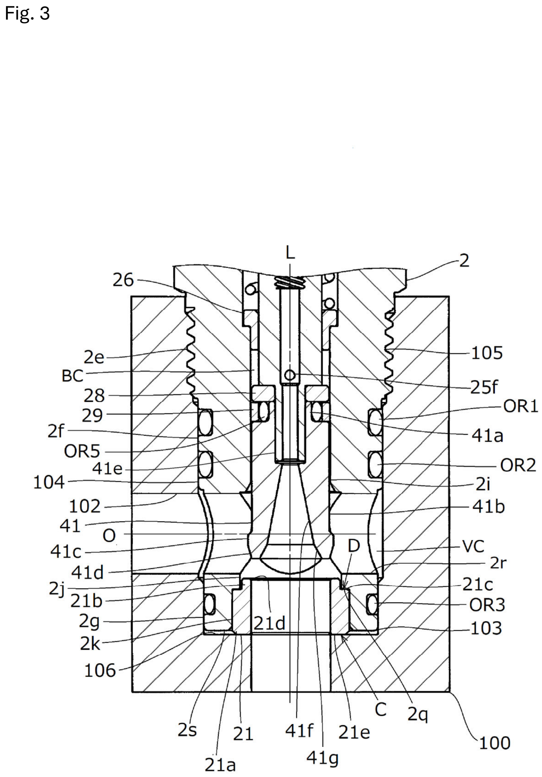

FIG. 1 is a vertical cross-sectional view of an electrically driven valve 1 according to the present embodiment, and illustrates a valve opened state. FIG. 2 is a vertical cross-sectional view of a lower portion of the electrically driven valve 1 in a valve closed state, and FIG. 3 is a vertical cross-sectional view of the lower portion of the electrically driven valve 1 in a valve opened state.

The electrically driven valve 1 according to the present embodiment is used to adjust a flow rate of a refrigerant, also referred to as fluid, in a refrigeration cycle, for example. The electrically driven valve 1 according to the present embodiment is attached to a flow passage block 100 and used. The electrically driven valve 1 and the flow passage block 100 constitute an electrically driven valve unit. An axis of the electrically driven valve 1 is referred to as L.

The flow passage block 100 having a cylindrical shape with a bottom includes a first flow passage 101 that is coaxial with the axis L, and a second flow passage 102 that is coaxial with an axis O that is orthogonal to the axis L. The first flow passage 101 and the second flow passage 102 each communicate an outer side and an inner side of the flow passage block 100. A low pressure piping not shown is connected to the first flow passage 101, and a high pressure piping not shown is connected to the second flow passage 102.

On an inner side of the flow passage block 100 are formed a lower inner circumference surface 103 having a cylindrical shape, an intermediate inner circumference surface 104 having a cylindrica shape and having a larger diameter than the lower inner circumference surface 103, and a female screw portion 105. An inner side of the flow passage block 100 constitutes a valve chamber VC. A bottom surface 106 that is a flat surface orthogonal to the axis L is formed between the lower inner circumference surface 103 and the first flow passage 101. The second flow passage 102 passes through the lower inner circumference surface 103 and communicates with the valve chamber VC.

The electrically driven valve 1 is composed of a valve main body 2 attached to the flow passage block 100, a can 3 having a cylindrical shape with a top, which is made of metal and which is fixed to the valve main body 2 via an annular member 31, a stepping motor composed of a stator 50 attached to an outer side of the can 3 and a rotor 57 attached into an inner side of the can 3, a deceleration mechanism 6 that decelerates and transmits a rotational torque of the rotor 57, a valve element unit 4 including a valve element 41 that controls an amount of passage of fluid by approaching or separating from a seat member 21, and a screw drive member 22 that converts a rotational movement of an output gear of the deceleration mechanism 6 into a linear movement via a screw feeding mechanism, i.e., conversion mechanism, described later to drive the valve element 41.

In FIG. 1, a pair of yokes 51, a pair of bobbins 52, and a pair of stator coils 53 are arranged on the outer side of the can 3, by which the stator 50 is formed, wherein an outer side thereof is covered by a resin mold cover 58. The rotor 57 and the stator 50 constitute a stepping motor. The resin mold cover 58 includes a box 59 that contains therein a circuit board for controlling and driving the stepping motor.

The valve main body 2 having an approximately circular pipe shape includes, from an upper end side, a first outer circumference portion 2a, a second outer circumference portion 2b having a greater diameter than the first outer circumference portion 2a, a third outer circumference portion 2c having a greater diameter than the second outer circumference portion 2b, a fourth outer circumference portion 2d having a greater diameter than the third outer circumference portion 2c, a male screw portion 2e that is screwed onto the female screw portion 105 of the flow passage block 100, a fifth outer circumference portion 2f fit to the intermediate inner circumference surface 104, and a sixth outer circumference portion 2g fit to the lower inner circumference surface 103. The annular member 31 is fixed by welding to an outer circumference of the second outer circumference portion 2b. A lower end of the circular pipe shape of the resin mold cover 58 described below comes into contact with a stepped surface between the third outer circumference portion 2c and the fourth outer circumference portion 2d, and a dust-proof O-ring OR4 is arranged between the lower end of the circular pipe shape described above and the third outer circumference portion 2c, by which a space therebetween is sealed.

Further, the valve main body 2 includes, from the upper end side, a first inner circumference portion 2h that extends to an area close to an upper end of the male screw portion 2e, a second inner circumference portion 2i having a smaller diameter than the first inner circumference portion 2h, a third inner circumference portion 2j having a larger diameter than the second inner circumference portion 2i, and a fourth inner circumference portion, hereinafter referred to as end opening, 2k having a larger diameter than the third inner circumference portion 2j. The sixth outer circumference portion 2g and the end opening 2k are arranged adjacent to a lower end 2s of the valve main body 2. The lower end 2s is an end portion close to a side opening 2r in the axial direction, and an upper end of the valve main body 2 is an end portion distant from the side opening 2r. A receiving surface 2q orthogonal to the axis L is formed between the third inner circumference portion 2j and the end opening 2k. To cancel pressure, an inner diameter of the second inner circumference portion 2i is approximately equal to an inner diameter of a valve seat 21d of the seat member 21.

The side opening 2r is formed so as to communicate the fifth outer circumference portion 2f, i.e., outer circumference side, and the second inner circumference portion 2i, i.e., inner circumference side. The side opening 2r is formed to pass through in an intersecting manner in a cross shape when viewed in the axis L direction, for example, and the axis of the side opening 2r is arranged to overlap with the axis O of the second flow passage 102 of the flow passage block 100 in FIG. 1. It is preferable that the inner diameter of the side opening 2r is approximately equal to the inner diameter of the second flow passage 102. By forming the side opening 2r in a cross shape, when attaching the valve main body 2 to the flow passage block 100, it may be possible to prevent the amount of refrigerant flowing into the valve chamber VC from the second flow passage 102 to be restricted even if the phase of the side opening 2r about the axis L does not completely correspond to the second flow passage 102.

A first circumference groove 2m and a second circumference groove 2n are formed above and below and in parallel with each other on the fifth outer circumference portion 2f on the upper side of the side opening 2r. A first O-ring OR1 is arranged in the first circumference groove 2m, and a second O-ring OR2 is arranged in the second circumference groove 2n, by which a space between the flow passage block 100 and the valve main body 2 is sealed. The reason why two O-rings are arranged one above the other is that the sealing is strengthened to correspond to a high pressure refrigerant being introduced to the side opening 2r, thereby suppressing the leakage of refrigerant to the outer side of the electrically driven valve 1.

Further, a third circumference groove 2p is formed on the sixth outer circumference portion 2g, and a third O-ring OR3 is arranged on the third circumference groove 2p, by which a space between the flow passage block 100 and the lower end of the valve main body 2 is sealed.

The seat member 21 having a circular pipe shape is fixed by press-fitting to an inner side in a radial direction of the end opening 2k. The attaching of the seat member 21 is not limited to press-fitting, and for example, the attaching may be realized through screw-fixing. With reference to FIGs. 2 and 3, the seat member 21 formed of metal, such as stainless steel, is formed by consecutively connecting a thick-wall cylindrical portion 21a, and a thin-wall cylindrical portion 21b extending upward from the thick-wall cylindrical portion 21a. Inner diameters of the thick-wall cylindrical portion 21a and the thin-wall cylindrical portion 21b are equal, with the inner side of the seat member 21 forming a valve opening and an inner circumference of an upper end of the thin-wall cylindrical portion 21b constituting the valve seat 21d. The seat member 21 has at least a portion thereof arranged within the end opening 2k, and the valve seat 21d is arranged on the valve chamber VC side.

An outer diameter of the thick-wall cylindrical portion 21a is slightly larger than an inner diameter of the end opening 2k such that press-fitting may be enabled, that is, such that no gap is formed therebetween, and an outer diameter of the thin-wall cylindrical portion 21b is slightly smaller than an inner diameter of the third inner circumference portion 2j, that is, such that a gap is formed therebetween. An upper end of the thin-wall cylindrical portion 21b is preferably positioned at the same position as the lower end of an inner circumference of the side opening 2r, or a second opening 102, in the axis L direction, or on a side close to the first flow passage 101. By adjusting the upper end position of the thin-wall cylindrical portion 21b in the axis L direction and the lower end position of the inner circumference of the side opening 2r, flow rate characteristics during the valve opened state may be adjusted. For example, it may be possible to prepare multiple types of seat members 21 having different lengths of the thin-wall cylindrical portion 21b, such that the seat member 21 including the thin-wall cylindrical portion 21b having a length that corresponds to the necessary characteristics may be selected and used.

A contact stepped surface 21c orthogonal to the axis L is formed between the thick-wall cylindrical portion 21a and the thin-wall cylindrical portion 21b. The contact stepped surface 21c serves as a contact surface that restricts the movement of the seat member 21 toward the valve chamber VC side within the end opening 2k. As illustrated in FIG. 2, along the axis L, a length A of the end opening 2k is shorter than a length B of the thick-wall cylindrical portion 21a. Therefore, in a state where the seat member 21 is attached to the valve main body 2 and the valve main body 2 is attached to the flow passage block 100, a lower end 21e of the seat member 21 will come into contact with the bottom surface 106 of the flow passage block 100, and a gap (B-A) will be formed between the lower end 2s of the valve main body 2 and the bottom surface 106. In other words, the lower end 21e of the seat member 21 is protruded toward the lower side in the axis L direction beyond the lower end 2s of the valve main body 2, that is, positioned on the bottom surface 106 side. The gap (B-A) is a value set so as not to be a negative value, taking a general fabrication tolerance into consideration. According to the present embodiment, the lower end 21e of the seat member 21 constitutes a first contact surface that comes into contact with the bottom surface 106 of the flow passage block 100 facing a pressing direction by differential pressure, and a second contact surface that comes into contact with the bottom surface 106 by receiving an axial force of the valve main body 2.

In FIG. 1, a shaft support portion 81 made of resin is attached to an inner side of an upper end of the can 3. More specifically, the shaft support portion 81 is formed by consecutively connecting a cylindrical portion 81a having its upper end surface in contact with a lower surface of the can 3 with a flange portion 81b arranged in a circumference of the cylindrical portion 81a and having its outer circumference in contact with an inner circumference of the can 3, and a through hole 81c is formed at a center on a lower surface of the cylindrical portion 81a coaxially with the axis L. An inner diameter of the through hole 81c is approximately equal to an outer diameter of a support shaft 8. A rotor support member 56 is attached facing the shaft support portion 81 on an upper end of the rotor 57 having a cylindrical shape arranged on the inner side of the can 3, forming a cylindrical shape with a top. The deceleration mechanism 6 is arranged on an inner side of the rotor 57 in a radial direction.

The deceleration mechanism 6 includes, on an inner circumference side of the rotor 57, a sun gear 61 formed integrally with the rotor support member 56, an upper portion of a fixed ring gear 62 that is fixed via a thin-wall cylindrical body 66 that is fixed to an upper portion of the valve main body 2 and that extends upward, a plurality of planetary gears 63 that are arranged between the sun gear 61 and the fixed ring gear 62 and that are meshed therewith, a carrier 64 that supports the planetary gears 63 rotatably, and an output gear member 65 having a cylindrical shape with a bottom including teeth that mesh with the planetary gears 63 disposed on an inner circumference thereof, by which a mechanical paradox planetary gear deceleration mechanism is formed. The number of teeth of the fixed ring gear 62 is set to differ from the number of teeth of the output gear member 65.

The support shaft 8 made of metal passes through the rotor support member 56 and the sun gear 61, and is held rotatably therewith. An upper end of the support shaft 8 is fit to and supported by the through hole 81c of the shaft support portion 81 attached to the can 3. A lower end of the support shaft 8 is fit to a blind hole 22f formed on an upper end of the screw drive member 22.

A first shaft portion 22a of the screw drive member, i.e., output shaft, 22 having a cylindrical shaft shape is connected and fixed by press-fitting to a center of a bottom portion of the output gear member 65, and the output gear member 65 and the screw drive member 22 rotate integrally. The screw drive member 22 includes the first shaft portion 22a, a second shaft portion 22b having a larger diameter than the first shaft portion 22a, a third shaft portion 22c having a smaller diameter than the second shaft portion 22b, a fourth shaft portion 22d having a smaller diameter than the third shaft portion 22c, and a male screw portion 22e. A bottom surface of the output gear member 65 comes into contact with an upper surface of the second shaft portion 22b.

A bearing holding member 23 having a circular pipe shape is attached to an upper end of the valve main body 2. The bearing holding member 23 includes an upper outer circumference portion 23a, an intermediate outer circumference portion 23b having a larger diameter than the upper outer circumference portion 23a, and a lower outer circumference portion 23c having a smaller diameter than the intermediate outer circumference portion 23b. The thin-wall cylindrical body 66 is fixed, for example by welding, by abutting the lower end thereof against a stepped portion between the upper outer circumference portion 23a and the intermediate outer circumference portion 23b so as to fit to the upper outer circumference portion 23a. Further, the valve main body 2 is fixed, for example by press-fitting, by abutting the upper end thereof against a stepped portion between the lower outer circumference portion 23c and the intermediate outer circumference portion 23b so as to have the first inner circumference portion 2h fit to the lower outer circumference portion 23c.

Further, the bearing holding member 23 includes an upper inner circumference portion 23d, and a lower inner circumference portion 23e having a smaller diameter than the upper inner circumference portion 23d. An outer ring of a rolling bearing 24 is fit to the upper inner circumference portion 23d while abutting a lower end thereof against a stepped portion between the upper inner circumference portion 23d and the lower inner circumference portion 23e.

An inner ring of the rolling bearing 24 is fit and attached to an outer circumference of the second shaft portion 22b by having an upper end thereof come into contact with a stepped portion between the second shaft portion 22b and the third shaft portion 22c of the screw drive member 22. Thereby, the screw drive member 22 is held rotatably while having an axial direction position thereof fixed via the bearing holding member 23 with respect to the valve main body 2.

The male screw portion 22e of the screw drive member 22 is engaged with a female screw portion 25e of a driven member 25. The driven member 25 includes a large cylindrical portion 25a, a small cylindrical portion 25b that protrudes downward from a lower end of the large cylindrical portion 25a, and a flange portion 25c that extends outward in a radial direction from an upper end of the large cylindrical portion 25a. An outer diameter of the flange portion 25c is smaller than an inner diameter of the second inner circumference portion 2i. Further, the driven member 25 includes a through hole 25d that extends in the axis L direction, and an upper portion of the through hole 25d serves as the female screw portion 25e. A communication hole 25f that communicates the through hole 25d and an outer circumference of the driven member 25 is formed in a vicinity of the lower end of the large cylindrical portion 25a.

A rotary motion of the output gear member 65 is converted into a linear motion along the axis L by a screw feeding mechanism, i.e., conversion mechanism, composed of the male screw portion 22e and the female screw portion 25e.

A spring bearing member 26 having an approximately circular pipe shape is arranged between the large cylindrical portion 25a and the second inner circumference portion 2i of the valve main body 2, and the spring bearing member 26 is fixed to the valve main body 2 by having a lower surface of a diameter expansion portion formed on an upper end thereof come into contact with a stepped surface between the first inner circumference portion 2h and the second inner circumference portion 2i. The large cylindrical portion 25a is disposed slidably with respect to the spring bearing member 26, and thereby, the driven member 25 is movable in the axis L direction with respect to the valve main body 2.

A coil spring 27 is arranged between a lower surface of the flange portion 25c and an upper end of the spring bearing member 26 so as to encase the large cylindrical portion 25a, urging the driven member 25 upward with respect to the valve main body 2. The coil spring 27 has a function to reduce any backlash between the male screw portion 22e and the female screw portion 25e.

A retaining ring 28, an inner O-ring OR5, a sliding ring 29 made, for example of PTFE, and the valve element 41 are attached to the lower side of the driven member 25. The driven member 25, the retaining ring 28, the inner O-ring OR5, the sliding ring 29, and the valve element 41 constitute the valve element unit 4. Although not illustrated, the valve element unit 4 includes a mechanism for preventing co-rotation of the screw drive member 22 and the driven member 25. A space between the valve main body 2 and the driven member 25 in the space between the spring bearing member 26 and the retaining ring 28 is referred to as a back pressure chamber BC.

The retaining ring 28 has its inner circumference fit to the small cylindrical portion 25b and its upper surface come into contact with and fixed to a stepped surface between the large cylindrical portion 25a and the small cylindrical portion 25b, and has a function to retain the inner O-ring OR5.

In FIGs. 2 and 3, the valve element 41 having a cylindrical shape includes a small diameter portion 41a having its upper end come into contact with a lower surface of the retaining ring 28, a large diameter portion 41b having a larger diameter than the small diameter portion 41a, and a diameter expansion raised portion 41c having a larger diameter than the large diameter portion 41b. The large diameter portion 41b is fit slidably to the second inner circumference portion 2i of the valve main body 2. A lower end of the diameter expansion raised portion 41c serves as a valve element portion 41d having a tapered shape that reduces in diameter toward the lower side in the axial direction. The valve element portion 41d may be seated on the valve seat 21d of the seat member 21. The inner O-ring OR5 is arranged on an outer circumference of the small diameter portion 41a, and the sliding ring 29 is arranged on an outer circumference thereof.

In order to suppress the leakage of high-pressure refrigerant introduced to the valve chamber VC, a set deformation amount of the inner O-ring OR5 must be increased so as to enhance a sealability compared to a case where a refrigerant having a normal pressure is used. In such a case, if the sliding ring 29 is not provided, the outer circumference of the inner O-ring OR5 will come into direct contact with the inner circumference of the valve main body 2 and a large frictional force will be applied thereby, possibly obstructing the movement of the valve element 41. By inserting the sliding ring 29 formed of a low friction material between the inner O-ring OR5 and the inner circumference of the valve main body 2, a smooth movement of the valve element 41 may be ensured while preventing leakage of the refrigerant.

Further, the valve element 41 has a shape that passes through in the axial direction, having a fitting portion 41e to which is fit the small cylindrical portion 25b formed on an upper end side of the through hole, and having a first tapered portion 41f and a second tapered portion 41g that expand in diameter toward the lower side on the lower end side of the through hole. An inclining angle of the first tapered portion 41f with respect to the axis L is smaller than an inclining angle of the second tapered portion 41g.

### (Assembly of Electrically Driven Valve)

When assembling the electrically driven valve 1 of the present embodiment, at first, the retaining ring 28, and the valve element 41 having the inner O-ring OR5 and the sliding ring 29 attached thereto are inserted from the lower end side of the single valve main body 2, and thereafter, the spring bearing member 26, the coil spring 27, and the driven member 25 are inserted from the upper end side of the valve main body 2, then the small cylindrical portion 25b is press-fit to the fitting portion 41e through the retaining ring 28. Further, the seat member 21 is press-fit to the end opening 2k from the lower end side of the valve main body 2 toward the side opening 2r. Since the seat member 21 may be inserted to the valve main body 2 from the end portion of the valve main body 2, the assembling property may be improved.

After screw-engaging the driven member 25 of the valve element unit 4 and the screw drive member 22, the shaft support portion 81, the support shaft 8, the rotor 57, the deceleration mechanism 6, the screw drive member 22, the rolling bearing 24, and the bearing holding member 23 are assembled.

In this state, the bearing holding member 23 is fixed to the valve main body 2, and the can 3 is fixed thereto via the annular member 31.

Thereafter, an O-ring is attached to the valve main body 2, before the valve main body 2 is inserted to the flow passage block 100, and the male screw portion 2e and the female screw portion 105 are screw-engaged. When the male screw portion 2e is screwed into the female screw portion 105, the lower end 21e of the seat member 21 comes into contact with the bottom surface 106 of the flow passage block 100, and the contact stepped surface 21c comes into contact with the receiving surface 2q along the entire circumference about the axis around the valve seat 21d of the seat member 21. Thereafter, the stator 50 is attached around the can 3. Thereby, the electrically driven valve unit is completed.

According to the present embodiment, since the seat member 21 is press-fit to the end opening 2k of the valve main body 2, a press-fit surface, i.e., a contact surface of an outer circumference surface of the seat member 21 and an inner circumference surface of the end opening 2k, serves as a sealing surface for sealing the refrigerant. However, it may be possible to insert the seat member 21 to the end opening 2k by realizing a dimensional relationship such that the end opening 2k will not be press-fit to the seat member 21, that is, such that it will have a minute gap therebetween. In such a case, the contact stepped surface 21c, which is a surface that faces the valve main body 2 in the seat member 21, comes into contact about the entire circumference with the receiving surface 2q when the seat member 21 is inserted, not press-fit, from one end side of the valve main body 2 toward the side opening 2r.

Meanwhile, when the valve main body 2 is attached to the flow passage block 100, that is, when the male screw portion 2e is screw-engaged to apply an axial force toward the lower side to the valve main body 2, the seat member 21 is pressed in a compressed manner by being sandwiched between the receiving surface, i.e., first contact surface, 2q and the flow passage block, that is, the bottom surface, i.e., second contact surface, 106 of the flow passage block 100 coming into contact with the lower end 21e. In this state, the contact stepped surface 21c and the lower end 21e that face the seat member 21 in the axial direction serve as a sealing surface that seals the refrigerant. However, the contact stepped surface 21c has a smaller contact area than the lower end 21e, and a stronger surface pressure is applied thereto, such that it is more preferable as the sealing surface.

The press-fit surface, the contact stepped surface 21c, or the lower end 21e of the seat member 21 provides sealing such that the high-pressure refrigerant entering the gap between an outer circumference of the thin-wall cylindrical portion 21b and an inner circumference of the third inner circumference portion 2j does not leak to the first flow passage 101 side beyond the press-fit surface, the contact stepped surface 21c, or the lower end 21e. If the stepped surface 21c serves as the sealing surface, the surface pressure of the contact stepped surface 21c and the receiving surface 2q becomes high, since the screw diameter of the male screw portion 2e is larger by 1.5 times or more, for example, than the outer diameter of the contact stepped surface 21c. Therefore, leakage of refrigerant may be suppressed effectively.

Even in a case where the seat member 21 is press-fit to the end opening 2k of the valve main body 2, when there is an axial-direction groove formed on the outer circumference surface of the seat member 21, the contact stepped surface 21c may be set as the sealing surface.

### (Operation of Electrically Driven Valve)

In the valve closed state illustrated in FIG. 2, the valve element portion 41d of the valve element 41 is seated on the valve seat 21d, such that refrigerant is prevented from flowing from the valve chamber VC via the valve opening toward the first flow passage 101.

In such a valve closed state, the pressure of the first flow passage 101 is transmitted via the valve opening of the seat member 21, the inner side of the valve element 41, and the communication hole 25f to the back pressure chamber BC between the driven member 25 and the valve element 41. The space between the back pressure chamber BC and the side opening 2r is sealed by the inner O-ring OR5. Therefore, the pressure at both sides of the valve element 41 in the axis L direction is equalized, such that the valve opening operation is not hindered.

From the valve closed state, when the rotor 57 is driven to rotate by magnetic force generated by feeding power to the stator 50, rotational torque of the rotor 57 is transmitted via the rotor support member 56 to the sun gear 61 of the deceleration mechanism 6, and a rotational torque decelerated by a predetermined deceleration ratio is output from the output gear member 65. Thereby, the screw drive member 22 rotates together with the output gear member 65.

The rotational movement of the screw drive member 22 is converted into a linear movement by a screw feeding mechanism composed of the male screw portion 22e and the female screw portion 25e, and thereby, the driven member 25 is lifted along the axis L direction together with the valve element 41 with respect to the valve main body 2, such that the valve element portion 41d separates from the valve seat 21d, and the valve opened state illustrated in FIG. 3 is realized. In the valve opened state, fluid flows from the valve chamber VC toward the valve opening of the seat member 21 and the first flow passage 101 according to a flow rate corresponding to the gap between the valve element portion 41d and the valve seat 21d.

From the valve opened state, by feeding power having inverse characteristics to the stator 50, the rotor 57 rotates in the opposite direction, such that the valve element 41 may be lowered by a reveres operation as the operation described above, and the valve element portion 41d of the valve element 41 may be seated on the valve seat 21d such that a valve closed state is realized.

As illustrated in FIG. 2, according to the present embodiment, the gap (B-A) is formed between the lower end 2s of the valve main body 2 and the bottom surface 106, such that the axial force of the valve main body 2 in the axis L direction that occurs by screwing into the flow passage block 100 is entirely received by an annular contact area C between the lower end 21e of the seat member 21 and the bottom surface 106 of the flow passage block 100. Further, since the contact stepped surface 21c opposed to the lower end 21e interposing the thick-wall cylindrical portion 21a contacts the receiving surface 2q of the valve main body 2 along an annular contact area D, an upward reaction force generated in the annular contact area C may be received by the annular contact area D. Therefore, the seat member 21 receives a pressing force applied from both sides thereof in the axial direction, by which the seat member 21 is fixed. Since the area of the annular contact area D is smaller than the area of the annular contact area C, a high surface pressure may be ensured, and the sealability may be enhanced. It is preferable that the annular contact area C is partially overlapped with the annular contact area D when viewed in the axial direction.

Since an inner pressure difference between the second flow passage 102 to which the high-pressure refrigerant is introduced and the first flow passage 101 is great, a pressing force downward in the axial direction corresponding to the inner pressure difference is applied to the seat member 21. According to the present embodiment, the lower end 21e of the seat member 21 is in contact with the bottom surface 106 of the flow passage block 100, such that even if a downward pressing force acts thereon, the seat member 21 will not fall from the valve main body 2, and the sealability of the annular contact area D may be maintained. Thus, there is no need to consider the press-fit margin of the seat member 21 with respect to the valve main body 2, and the seat member 21 may be further downsized, such that a compact electrically driven valve 1 may be provided at a low cost.

In the present example, the pressing force of the seat member 21 based on the inner pressure difference between the second flow passage 102 and the first flow passage 101, and the axial force in the axis L direction generated by screwing the valve main body 2 onto the flow passage block 100 are mainly received by the annular contact area C.

Even in a case where the lower end 21e of the seat member 21 is positioned at an equivalent position as the lower end 2s of the valve main body 2 or on an upper side therefrom, for example, by forming the bottom surface 106 of the flow passage block 100 to be raised annularly to correspond to the seat member 21, instead of a flat surface, an effect similar to the present embodiment may be achieved. By forming the raised portion on the bottom surface 106 of the flow passage block 100 to be in contact with the lower end 21e of the seat member 21 without coming into contact with the lower end 2s of the valve main body 2, a predetermined gap may be formed between the lower end 2s of the valve main body 2 and the bottom surface 106.

### (Modified Example)

Even according to a specification where a high pressure piping is connected to the first flow passage 101 such that it serves as a high pressure-side flow passage and a low pressure piping is connected to the second flow passage 102 such that it serves as a low pressure-side flow passage, which is opposite to the embodiment described above, the electrically driven valve 1 according to the present embodiment may still be used with a common configuration. In that case, in the valve closed state, the outer side of the thin-wall cylindrical portion 21b in the radial direction interposing the annular contact area D is set to low pressure, and the outer side of the thick-wall cylindrical portion 21a in the radial direction is set to high pressure.

According to the electrically driven valve 1 of the modified example, the valve opening and closing operation is also common, except that the refrigerant flows from the first flow passage 101 toward the second flow passage 102 when the valve is opened. In this example, based on the inner pressure difference between the first flow passage 101 into which the high-pressure refrigerant is introduced and the second flow passage 102, a pressing force in the upper axial direction corresponding to the inner pressure difference acts on the seat member 21, which contributes to enhancing the sealability of the annular contact area D. According to the present modified example, the contact stepped surface 21c of the seat member 21 constitutes the first contact surface and sealing surface that faces the insertion direction of the seat member 21 and the pressing direction due to the differential pressure and that comes into contact with the receiving surface 2q of the valve main body 2, and the lower end 21e of the seat member 21 constitutes the second contact surface that opposes the contact stepped surface 21c in the axial direction interposing the thick-wall cylindrical portion 21a and that comes into contact with the flow passage block 100.

Further according to the modified example, an inner diameter of the first flow passage 101 may be set equal to or larger than the outer diameter of the seat member 21. In this state, a pressing force from the first flow passage 101 side toward the valve chamber VC side acts on the seat member 21 due to the differential pressure of refrigerant, a state in which the contact stepped surface 21c comes into contact with the receiving surface 2q of the valve main body 2 is maintained, such that the seat member 21 will not fall out of the valve main body 2 even without a second contact surface. Further, according to the above-mentioned configuration, after attaching the valve main body 2 to the flow passage block 100, the seat member 21 may be press-fit to the valve main body 2 from the outer side of the flow passage block 100 through the first flow passage 101. According to this example, the seat member 21 includes the first contact surface and the sealing surface serving as the contact stepped surface 21c, but it does not include a second contact surface.

The present invention is not limited to the embodiments described above. Modification of any component of the embodiments described above is enabled within the scope of the present invention. Further, an arbitrary component may be added to or deleted from the embodiments described above. For example, as a deceleration mechanism, a deceleration mechanism composed of a gear set may be disposed instead of the mechanical paradox planetary gear deceleration mechanism. Further, the electrically driven valve according to the present invention may be used for flow rate control of high pressure fluid including CO₂, for example.

The present specification includes the following disclosures of the invention.

### (First Aspect)

An electrically driven valve including:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the valve main body includes a contact surface configured to restrict a movement of the seat member toward the valve chamber side within the end opening.

### (Second Aspect)

The electrically driven valve according to claim 1, wherein, in a state where the valve main body is attached to a flow passage block having a first flow passage and a second flow passage, the seat member includes a first contact surface that is disposed on an upper end side of the seat member and that comes into contact with the valve main body, and a second contact surface that is disposed on a lower end of the seat member and that comes into contact with the flow passage block.

### (Third Aspect)

The electrically driven valve according to the second aspect, wherein the seat member is press-fit to the end opening, and wherein an outer circumference surface of the seat member and a contact surface of the end opening serve as a sealing surface configured to seal fluid.

### (Fourth Aspect)

The electrically driven valve according to the second aspect, wherein at least one of the first contact surface and the second contact surface serves as a sealing surface configured to seal fluid.

### (Fifth Aspect)

An electrically driven valve including:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the seat member is inserted into the end opening from one end side of the valve main body toward the valve chamber, and configured to come into contact across an entire circumference with the vale main body in a circumference of the valve seat.

### (Sixth Aspect)

The electrically driven valve according to claim 5, wherein, in a state where the valve main body is attached to a flow passage block having a first flow passage and a second flow passage, the seat member includes a first contact surface that is disposed on an upper end side of the seat member and that comes into contact with the valve main body, and a second contact surface that is disposed on a lower end of the seat member and that comes into contact with the flow passage block.

### (Seventh Aspect)

The electrically driven valve according to the sixth aspect, wherein the seat member is press-fit to the end opening, and wherein an outer circumference surface of the seat member and a contact surface of the end opening serve as a sealing surface configured to seal fluid.

### (Eighth Aspect)

The electrically driven valve according to the sixth aspect, wherein at least one of the first contact surface and the second contact surface serves as a sealing surface configured to seal fluid.

### (Ninth Aspect)

The electrically driven valve according to any one of the first to eight aspects,
wherein, in a state where the valve main body is attached to the flow passage block, a lower end of the seat member is positioned toward a bottom surface side of the flow passage block than a lower end of the valve main body.

### (Tenth Aspect)

The electrically driven valve according to any one of first to ninth aspects,
wherein, when the valve main body having the seat member assembled thereto is caused to approach a bottom surface of the flow passage block, a lower end of the seat member comes into contact with the bottom surface before a lower end of the valve main body comes into contact with the bottom surface.

### (Eleventh Aspect)

An electrically driven valve unit including the electrically driven valve according to any one of first to eighth aspects, and a flow passage block to which the electrically driven valve is assembled.

### [Reference Signs List]

1 electrically driven valve
2 valve main body
2k end opening
2r side opening
2s end portion of valve main body
3 can
6 deceleration mechanism
8 support shaft
21 seat member
21c contact stepped surface
21d valve seat
21e end portion of seat member
22 screw drive member
23 bearing holding member
24 rolling bearing
25 driven member
26 spring bearing member
27 coil spring
41 valve element
41d valve element portion
50 stator
57 rotor
81 shaft support portion
100 flow passage block
101 first flow passage
102 second flow passage
BC back pressure chamber
VC valve chamber

## Claims

1. An electrically driven valve comprising:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the valve main body includes a contact surface configured to restrict a movement of the seat member toward the valve chamber side within the end opening.

2. The electrically driven valve according to claim 1, wherein, in a state where the valve main body is attached to a flow passage block having a first flow passage and a second flow passage, the seat member includes a first contact surface that is disposed on an upper end side of the seat member and that comes into contact with the valve main body, and a second contact surface that is disposed on a lower end of the seat member and that comes into contact with the flow passage block.

3. The electrically driven valve according to claim 2, wherein the seat member is press-fit to the end opening, and wherein an outer circumference surface of the seat member and a contact surface of the end opening serve as a sealing surface configured to seal fluid.

4. The electrically driven valve according to claim 2, wherein at least one of the first contact surface and the second contact surface serves as a sealing surface configured to seal fluid.

5. An electrically driven valve comprising:
a valve main body including a valve chamber, an end opening that communicates with the valve chamber and that is opened in an axial direction, and a side opening that communicates with the valve chamber and that is opened in a direction intersecting the axis;
a seat member, at least one portion of which is arranged within the end opening, the seat member including a valve seat disposed on a valve chamber side;
a valve element configured to approach to or separate from the valve seat; and
a conversion mechanism configured to convert a rotational movement of a rotor into a linear movement of the valve element,
wherein the seat member is inserted into the end opening from one end side of the valve main body toward the valve chamber, and configured to come into contact across an entire circumference with the vale main body in a circumference of the valve seat.

6. The electrically driven valve according to claim 5, wherein, in a state where the valve main body is attached to a flow passage block having a first flow passage and a second flow passage, the seat member includes a first contact surface that is disposed on an upper end side of the seat member and that comes into contact with the valve main body, and a second contact surface that is disposed on a lower end of the seat member and that comes into contact with the flow passage block.

7. The electrically driven valve according to claim 6, wherein the seat member is press-fit to the end opening, and wherein an outer circumference surface of the seat member and a contact surface of the end opening serve as a sealing surface configured to seal fluid.

8. The electrically driven valve according to claim 6, wherein at least one of the first contact surface and the second contact surface serves as a sealing surface configured to seal fluid.

9. The electrically driven valve according to claim 1 or claim 5,
wherein, in a state where the valve main body is attached to a flow passage block, a lower end of the seat member is positioned toward a bottom surface side of the flow passage block than a lower end of the valve main body.

10. The electrically driven valve according to claim 1 or claim 5,
wherein, when the valve main body having the seat member assembled thereto is caused to approach a bottom surface of a flow passage block, a lower end of the seat member comes into contact with the bottom surface before a lower end of the valve main body comes into contact with the bottom surface.

11. An electrically driven valve unit comprising the electrically driven valve according to claim 1, and a flow passage block to which the electrically driven valve is assembled.
